# EUROPÄISCHE PATENTSCHRIFT

(11) **EP 1 510 811 B1**
(45) Veröffentlichungstag und Bekanntmachung des Hinweises auf die Patenterteilung: **18.10.2006**
(21) Anmeldenummer: 04018215.6
(22) Anmeldetag: 31.07.2004
(51) Int. Cl.: G01N 23/20, G01N 23/207

(54) **Aufnahme eines zweidimensionalen Beugungsmusters durch Rotation eines eindimensional ortsauflösenden Detektors**
Detection of a twodimensional diffraction pattern by rotation of a one dimensional position sensitive detector
Détection d'une image diffractée bidimensionnelle par rotation d'un détecteur spatial à une dimension

(30) Priorität: 30.08.2003 DE 10340072
(43) Veröffentlichungstag der Anmeldung: 02.03.2005
(73) Patentinhaber: Bruker AXS GmbH, 76187 Karlsruhe (DE)
(72) Erfinder: Brügemann, L., Dr., 76448 Durmersheim (DE); Gerndt, E., Dr., 76227 Karlsruhe (DE); Ress, H., Dr., 76131 Karlsruhe (DE); Helming, K., Dr., 01257 Dresden (DE); Preckwinkel, U., Dr., Fitchburg, WI 53711 (US)
(74) Vertreter: Kohler Schmid Möbus

(56) Entgegenhaltungen:
- GB-A- 2 228 167
- US-A1- 2004 156 474
- PATENT ABSTRACTS OF JAPAN Bd. 1999, Nr. 04, 30. April 1999 (1999-04-30) -& JP 11 006806 A (RIGAKU CORP), 12. Januar 1999 (1999-01-12)
- PATENT ABSTRACTS OF JAPAN Bd. 2002, Nr. 10, 10. Oktober 2002 (2002-10-10) -& JP 2002 168810 A (RIGAKU CORP), 14. Juni 2002 (2002-06-14)
- MALHOTRA A K ET AL: "AN IN SITU/EX SITU X-RAY ANALYSIS SYSTEM FOR THIN SPUTTERED FILMS" SURFACE AND COATINGS TECHNOLOGY, ELSEVIER, AMSTERDAM, NL, Bd. 110, Nr. 1/2, 1998, Seiten 105-110, XP001061422 ISSN: 0257-8972
- PATENT ABSTRACTS OF JAPAN Bd. 2000, Nr. 12, 3. Januar 2001 (2001-01-03) -& JP 2000 258366 A (RIGAKU CORP), 22. September 2000 (2000-09-22)
- LEE CHANG-HEE ET AL: "High-resolution and high-intensity neutron diffractometer with linear position-sensitive detector" NUCL INSTRUM METHODS PHYS RES SECT A; NUCLEAR INSTRUMENTS AND METHODS IN PHYSICS RESEARCH, SECTION A: ACCELERATORS, SPECTROMETERS, DETECTORS AND ASSOCIATED EQUIPMENT AUG 11 2003, Bd. 508, Nr. 3, 11. August 2003 (2003-08-11), Seiten 353-361, XP004442415

## Beschreibung

Die Erfindung betrifft eine Detektoranordnung zum Erfassen von an einer Probe gestreuter Röntgen- oder Neutronenstrahlung, mit einem 1-dimensionalen, längs einer Detektorstrecke ausgerichteten, zählenden Teilchen- oder Photonendetektor,
wobei die Detektorstrecke im Wesentlichen senkrecht zu einer Verbindungsgeraden zwischen Probe und Detektor (=Streurichtung) angeordnet ist.

Eine solche Detektoranordnung ist beispielsweise aus der Firmendruckschrift "Position Sensitive Detector for D 5000 X-ray Diffractometers" der Firma Siemens, Oktober 1990, bekannt.

Röntgen- und Neutronenstreuung ist eine bedeutende Methode der Struktur-Aufklärung. Durch die Beugung von Röntgen- oder Neutronenstrahlung kann auf die Symmetrieeigenschaften des streuenden (in der Regel kristallinen) Materials geschlossen werden.

Zur Aufnahme der Beugungsmuster werden verschiedenartige Detektoren eingesetzt. Am verbreitetsten sind sogenannte null-dimensionale Detektoren. Diese erkennen, wenn ein Röntgenquant in einen kleinen Detektionsraum eindringt. Zum Erhalt eines vollständigen Beugungsmusters wird der nulldimensionale Detektor in einem Diffraktometer mittels eines Goniometers verfahren, etwa auf einem Kreisbogen im Falle eines theta-2theta-Scans oder auch zweidimensional gerastert zum Erfassen eines zweidimensionalen Beugungsbildes.

Ein eindimensionaler Detektor besitzt einen in einer Dimension langgestreckten Detektionsraum (=Detektorstrecke). Fällt ein Röntgenquant in den Detektionsraum, so erkennt der eindimensionale Detektor sowohl das Ereignis als auch die Position entlang der Detektorstrecke. Mit einem eindimensionalen Detektor können größere Teile eines Beugungsmusters auf einmal erfasst werden. Es ist auch bekannt, einen eindimensionalen Detektor durch Schwenken eines Goniometerarms zu verschieben, um so einen neuen zu vermessenden Raumwinkelbereich zu erschließen. Eindimensionale Detektoren sind deutlich teuerer als nulldimensionale Detektoren.

Zweidimensionale Detektoren besitzen eine in der Regel ebene, zweidimensionale Detektorfläche. Ein auf.der Detektorfläche auftreffendes Röntgenquant wird sowohl als Ereignis, als auch mit seinen beiden Raumkoordinaten auf der Detektorfläche registriert. Mit einem (originär) zweidimensionalen Detektor kann ein Beugungsmuster in einem einzigen Messschritt erstellt werden. Zweidimensionale Detektoren sind wiederum deutlich teuerer als eindimensionale Detektoren.

Bekannt sind auch zweidimensionale Speicherplatten, auf denen Röntgenstrahlung aufintegriert wird und die mittels eines lasergestützten Auswerteprozesses ausgelesen werden. Für höchste Auflösungsanforderungen bei der Aufnahme von Röntgenbeugungsmustern sind nach wie vor auch fotographische Filme in Verwendung.

JP2000258366 offenbart in Fig.1 eine Detektoranordnung zur Aufnahme eines zweidimensionalen Beugungsmusters mittels eines halbkreisförmigen 1-dimensionalen Detektors, der um eine Achse drehbar ist, die durch die Enden des Halbkreises geht.

JP11006806 offenbart eine Detektoranordnung mit einem drehbaren rechteckigen 1-dimensionalen Detektor, der für zwei zueinander senkrechte Positionen ausgelegt ist. Der Drehpunkt ist im Zentrum des Detektors angeordnet.

Es ist die Aufgabe der vorliegenden Erfindung, eine Detektoranordnung für Röntgen- oder Neutronenstrahlung zu schaffen, die kostengünstig und mit akzeptabler Geschwindigkeit die Aufnahme von zweidimensionalen Beugungsmustern ermöglicht.

Diese Aufgabe wird erfindungsgemäß gelöst durch eine Detektoranordnung gemäß Anspruch 1.

Die Detektorstrecke kann dadurch eine Kreisfläche senkrecht zur Streurichtung überfahren. Durch die Wahl des Drehpunkts an einem Ende der Detektorstrecke ist ein Durchmesser der Kreisfläche von einer doppelten Detektorstreckenlänge möglich. Die erfindungsgemäße Detektoranordnung liefert sodann typischerweise für ein Messzeitinterwall einen dreidimensionalen Parametersatz, bestehend aus: Ereignisanzahl (bzw. Zählrate) / Ort entlang der Detektorstrecke / Winkelposition der Detektorstrecke. Die Winkelposition kann dabei bevorzugt automatisch elektronisch eingestellt und erfasst sein oder auch von Operateur manuell festgelegt sein. Aus den Parametern Ort entlang der Detektorstrecke und Winkelposition der Detektorstrecke kann eine Position innerhalb der Kreisfläche bestimmt werden. Nach Messung in einer Vielzahl von Winkelpositionen (gerastert oder auch bei kontinuierlicher Drehung) ist damit die Detektoranordnung innerhalb der Kreisfläche zur Detektion nutzbar.

Der eindimensionale, drehbar gelagerte Detektor wird somit zu einem virtuellen zweidimensionalen Detektor. Zum Zusammensetzen eines zweidimensionalen Beugungsbildes (Streubildes) aus dem Parametersatz kann erfindungsgemäß ein Computer mit geeigneter Software eingesetzt werden.

Die zweidimensionale Nutzbarkeit ergibt sich dabei nicht aus einer Translationsführung des Detektors an einem beweglichen Goniometerarm, sondern aus der Drehbarkeit des Detektors an sich. Der Detektor besitzt einen bezüglich der Drehbewegung starren Drehpunkt. Die Drehachse, durch die der Drehpunkt verläuft, weist direkt auf die Probe. Die Detektorstrecke verläuft senkrecht zur Drehachse. Selbst wenn die Aufhängung des Drehpunktes ortsfest ist, kann die erfindungsgemäße Detektoranordnung noch als virtueller zweidimensionaler Detektor eingesetzt werden.

Bevorzugt wird ein eindimensionaler Detektor mit hoher maximaler Zählrate eingesetzt. In diesem Fall können zweidimensionale Beugungsmuster mit besserer Auflösung vermessen werden als mit einem originär zweidimensionalen Detektor. Originär zweidimensionale Detektoren sind in der Regel nur für geringe Strahlungsintensitäten pro Fläche geeignet.

Die Komponenten der erfindungsgemäßen Detektoranordnung, das ist ein eindimensionaler Detektor und eine drehbare Lagerung des eindimensionalen Detektors, ist deutlich billiger als ein zweidimensionaler Detektor mit einer Detektorfläche ähnlich der von der Detektorstrecke überstrichenen Kreisfläche des eindimensionalen Detektors.

Die erfindungsgemäße Detektoranordnung kann vorteilhaft eingesetzt werden bei Kleinwinkelstreuung (SAXS), insbesondere in Form einer Erweiterung der Kratky-Kammern, aber auch unter Verwendung eines Diffraktometers, bei Textur- und Eigenspannungsanalyse, Hochauflösungsdiffraktometrie, Reflektometrie, Out-of-plane Diffraktometrie und in der Einkristalldiffraktometrie.

Die Drehbarkeit des eindimensionalen Detektors bringt darüber hinaus einen Freiheitsgrad in einen Messaufbau, der eine Drehung der Messproben ersetzen kann, was bei aufgrund der Materialkonsistenz nicht drehbaren Probentypen vorteilhaft genutzt werden kann.

Besonders bevorzugt ist eine Ausführungsform der erfindungsgemäßen Detektoranordnung, bei der der Detektor auf einem schwenkbaren Goniometerarm montiert ist, wobei die Längsrichtung des Goniometerarms parallel zur Streurichtung verläuft. Der Drehpunkt des Detektors ist dabei starr am Goniometerarm befestigt. Durch Verschwenken des Detektorarms (und damit der Position des Drehpunkts des Detektors) können grundsätzlich beliebige Raumwinkelbereiche der quasi-zweidimensionalen Detektion zugänglich gemacht werden.

Bei einer alternativen, vorteilhaften Ausführungsform ist vorgesehen, dass die Probe von einer Quelle her in Transmission durchstrahlbar ist, und dass die Quelle, die Probe und der Detektor auf einer Geraden angeordnet sind (=Vorwärtsstreuung). Dies ist eine typische Kleinwinkel-Streuungs-Geometrie. Durch die Drehbarkeit der Detektorstrecke des Detektors ist eine zweidimensionale Streuinformation zugänglich, ohne dass es eines schwenkbaren Goniometerarms oder gar eines originär zweidimensionalen Detektors bedürfte. Ein Orientieren der Probe ist bei einer einkristallinen Probe nicht mehr erforderlich.

Die erfindungsgemäße Detektoranordnung sieht vor, dass eine Vielzahl von definierten Winkelpositionen des Detektors durch eine Drehung des Detektors um die Achse parallel zur Streurichtung einstellbar ist. Die beiden wichtigsten Winkelpositionen sind zum einen die Detektorstrecke senkrecht zur Streuebene (=Ebene von Quelle, Probe und Detektor, d.h. Ebene von auf die Probe fallendem Strahl und von der Probe ausgehendem Strahl) sowie in der Streuebene. Erfindungsgemäß sind weitere, äquidistante Winkelpositionen dazwischen ebenfalls einstellbar. Der Winkelvorschub von Winkelposition zu Winkelposition ist gerade so groß, dass am dem vom Drehpunkt weiter entfernt liegenden Ende der Detektorstrecke der Winkelvorschub entlang des Umfangs der überstrichenen Kreisfläche etwa der Breite der Detektorstrecke entspricht. Dadurch kann ein geschlossener Raumwinkelbereich lückenlos erfasst werden.

Bei einer vorteilhaften Weiterbildung dieser Ausführungsform sind die definierten Winkelpositionen automatisch gesteuert und/oder geregelt anfahrbar, insbesondere mittels eines Motors. Dies vereinfacht und beschleunigt die Einstellung der Winkelpositionen und macht die Einstellung und eine zugehörige Messung besser reproduzierbar.

In Ausgestaltung dieser Weiterbildung ist bevorzugt vorgesehen, dass die definierten Winkelpositionen nacheinander, insbesondere kontinuierlich anfahrbar sind. Durch ein nacheinander erfolgendes Anfahren benachbarter Messpositionen wird die Anfahrzeit der Winkelpositionen für einen Messgang minimiert. Bei einem kontinuierlichen Durchfahren der Winkelpositionen werden Lücken im erfassten Raumwinkelbereich der von der Detektorstrecke überstreichbaren Kreisfläche vermieden. Die kontinuierliche Durchfahren ist technisch einfach zu realisieren und schnell durchführbar: Die Zeit zum Einstellen einer neuen Winkelposition ist gleichzeitig Messzeit.

Erfindungsgemäß ist der Drehpunkt an einem Ende der Detektorstrecke angeordnet, so ist die überstreichbare Kreisfläche besonders groß. Das Überstreichen benötigt eine Volldrehung.

Ganz besonders bevorzugt ist eine Ausführungsform der erfindungsgemäßen Detektoranordnung, bei der der Detektor Einzelereignisse zählen kann. Damit werden besonders genaue und rasch auswertbare Messergebnisse erzielt.

In den Rahmen der vorliegenden Erfindung fällt auch ein Röntgen- oder Neutronen-Diffraktometer mit einer oben beschriebenen erfindungsgemäßen Detektoranordnung. Das erfindungsgemäße Diffraktometer ermöglicht eine Vielzahl von Probenorientierungen und Detektorpositionen für verschiedene Messverfahren.

Ebenfalls in den Rahmen der vorliegenden Erfindung fällt ein Verfahren zum Betrieb eines erfindungsgemäßen Diffraktometers, mit folgenden Schritten:
(a) Platzieren des Detektors auf einer ersten Position in einer ersten vorgegebenen Streurichtung;
(b) Orientieren des Detektors in eine erste Winkelposition durch Drehen des Detektors um die Achse parallel zur Streurichtung, und Aufnahme von ortsaufgelösten Messdaten längs der Detektorstrecke in der ersten Winkelposition;
(c) inkrementiertes Drehen des Detektors in mindestens eine weitere Winkelposition, und Aufnahme von ortsaufgelösten Messdaten längs der Detektorstrecke in dieser Winkelposition;
(d) Speichern und Verarbeiten der aufgenommenen Messdaten mit einem vorgegebenen Algorithmus.
Dies ist ein Grundverfahren zur Nutzung der erfindungsgemäßen Detektoranordnung.

Erfindungsgemäß ist vorgesehen, dass durch die verschiedenen Winkelpositionen des Detektors in den Schritten (b) bis (c) in der ersten Position des Detektors in der vorgegebenen Streurichtung der von der Detektorstrecke maximal überstreichbare Raumwinkelbereich vollständig erfasst wird. Dies geschieht dadurch, dass der Winkelvorschub so gering ist, dass im Außenbereich der Detektorstrecke der Vorschub kleiner oder gleich ist der Breite der Detektorstrecke (Die Detektorstrecke ist tatsächlich eine langgestreckte Detektorfläche einer gewissen Breite. Entlang der Längsrichtung erfolgt die Ortsauflösung). Erfindungsgemäß kann auch eine kontinuierliche Drehung der Detektorstrecke erfolgen. Diese Verfahrensvariante vermeidet "Löcher" im abgetasteten Raumwinkelbereich und gewährleistet eine zuverlässige Detektion aller Beugungsreflexe.

Besonders bevorzugt sieht eine Verfahrensvariante vor, dass durch den Algorithmus in Schritt (d) ein 2-dimensionales Beugungsbild erstellt wird. Dadurch kann mittels des preisgünstig herzustellenden erfindungsgemäßen Diffraktometers mit einem eindimensionalen Detektor eine zweidimensionale Streuinformation gewonnen werden.

Eine weitere, vorteilhafte Verfahrensvariante ist dadurch gekennzeichnet, dass nach Schritt (c) der Detektor in mindestens einer weiteren Position in einer weiteren vorgegebenen Streurichtung platziert wird, und dass die Verfahrensschritte (b) bis (c) in dieser weiteren Position des Detektors wiederholt werden. Noch weitere Positionen des Detektors bzw. Streurichtungen können sich anschließen. Dadurch kann ein grundsätzlich unbegrenzter Raumwinkelbereich kostengünstig vermessen werden.

Eine alternative, ebenso vorteilhafte Verfahrensvariante ist dadurch gekennzeichnet, dass nach Schritt (d) der Detektor in mindestens einer weiteren Position in einer weiteren vorgegebenen Streurichtung platziert wird, und dass die Verfahrensschritte (b) bis (d) in dieser weiteren Position des Detektors wiederholt werden. Noch weitere Positionen des Detektors bzw. Streurichtungen können sich anschließen. Auch dadurch kann ein grundsätzlich unbegrenzter Raumwinkelbereich kostengünstig vermessen werden.

In Ausgestaltung dieser beiden letzten Verfahrensvarianten ist es bevorzugt, dass durch die verschiedenen Positionen und Winkelpositionen des Detektors während des Verfahrens ein geschlossener Raumwinkelbereich vollständig erfasst wird. Dies vermeidet ein "Übersehen" von wichtigen Streuinformationen. Am einfachsten kann eine solche vollständige Erfassung durch eine geringfügige Überlappung der erfassten Raumwinkelbereiche in verschiedenen Positionen des Detektors erfolgen, d.h. die benachbarten Positionen des Detektors sind enger beabstandet als die die doppelte Reichweite der Detektorstrecke.

Alternativ zu einer Änderung der Position des Detektors kann auch die Lage der Probe verändert werden, um andere Bereiche eines Beugungsmusters zu erschließen. Die Position des Detektors kann dann konstant bleiben. Eine bevorzugte Verfahrensvariante sieht daher vor, dass nach Schritt (c) die Probe in mindestens eine weitere Lage, erhältlich durch Drehung und/oder Translation der Probe, gebracht wird, und dass die Verfahrensschritte (b) bis (c) in dieser weiteren Lage der Probe wiederholt werden.

In gleicher Weise bevorzugt ist eine Verfahrensvariante, die dadurch gekennzeichnet ist, dass nach Schritt (d) die Probe in mindestens eine weitere Lage, erhältlich durch Drehung und/oder Translation der Probe, gebracht wird, und dass die Verfahrensschritte (b) bis (d) in dieser weiteren Lage der Probe wiederholt werden. Bezüglich der beiden letzteren Verfahrensvarianten gilt, dass die Probe kontinuierlich gedreht werden kann, etwa bei einer gefüllten, dünnen Glaskapillare als Probe, oder die Lagen der Probe sind an die Detektorarmposition angepasst. Bei einer festen Detektorarmposition kann durch die Wahl der Lage der Probe die Eindringtiefe von Röntgenstrahlung in die Probe gewählt bzw. limitiert werden, gerade bei sehr kleinen Einfallswinkeln unterhalb 3°. Diese Limitierung kann bis auf wenige 10 Angström eingestellt werden, falls der Einfallswinkel der Röntgenstrahlung unterhalb des kritischen Winkels für Totalreflexion eingestellt ist. Insbesondere mit den letzten beiden Verfahrensvarianten sind folgende Anwendungen vorteilhaft durchführbar: Spannungsmessung (Chi oder Omega), grazing incidence diffraction (=GID), tiefenabhängige Röntgenbeugung (Kombination aus Chi, Phi und Omega), Topographie der Probe (x, y, z).

Schließlich gehört noch zur Erfindung ein alternatives Verfahren zum Betrieb eines erfindungsgemäßen Diffraktometers, mit folgenden Schritten:
(a') Orientieren des Detektors in eine erste, vorgegebene Winkelposition durch Drehen des Detektors um die Achse parallel zur Streurichtung;
(b') Platzieren des Detektors auf einer ersten Position in einer ersten Streurichtung, und Aufnahme von ortsaufgelösten Messdaten längs der Detektorstrecke in der ersten Position;
(c') inkrementiertes Platzieren des Detektors auf mindestens einer weiteren Position in einer weiteren Streurichtung, und Aufnahme von ortsaufgelösten Messdaten längs der Detektorstrecke in der weiteren Position;
(d')Speichern und Verarbeiten der aufgenommenen Messdaten mit einem vorgegebenen Algorithmus.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
Fig. 1: eine Detektoranordnung in Reflektionsgeometrie mit Drehpunkt in der Mitte der Detektorstrecke, die nicht unter Anspruch 1 fällt;
Fig. 2: eine erste erfindungsgemäße Detektoranordnung in Reflektionsgeometrie mit Drehpunkt am Rande der Detektorstrecke;
Fig. 3: eine weitere erfindungsgemäße Detektoranordnung in Transmissionsgeometrie.

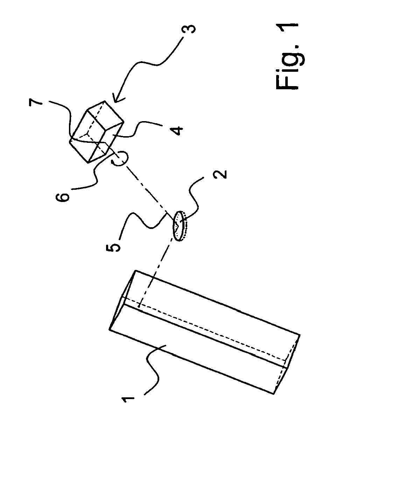

Die **Fig. 1** zeigt eine Detektoranordnung mit einer Röntgenquelle **1**, die als Röntgenröhre ausgeführt ist, mit einer Probe **2** und mit einem eindimensionalen Detektor **3**. Der eindimensionale Detektor 3 besitzt eine der Probe 2 zugewandte, etwa rechteckförmige Detektorstrecke **4**. Die Detektorstrecke 4 registriert jeden Einfall eines Röntgenquants, wobei der Ort des Einfalls des Röntgenquants auf der Detektorstrecke 4 entlang der Richtung der der längeren Seiten der Detektorstrecke 4 ortsaufgelöst registriert wird. Die ortsauflösende Richtung der Detektorstrecke 4, welche parallel zu den langen Seiten der Detektorstrecke 4 verläuft, definiert die Ausrichtung der Detektorstrecke 4. Eine Ortsauflösung entlang der Richtung der kurzen Seiten der Detektorstrecke 4 erfolgt nicht.

Die Detektorstrecke 4 ist senkrecht zur Verbindungsgerade **5** von Probe 2 und Detektor 3 ausgerichtet. Die Verbindungsgerade 5 von Probe 2 und Detektor 3 wird auch Streurichtung genannt. Der Detektor 3 ist erfindungsgemäß um eine Achse **6** drehbar gelagert. Die Achse 6 ist erfindungsgemäß parallel zur Streurichtung verlaufend. In der Ausführungsform von Fig. 1 ist fällt die Achse 6 mit der Verbindungsgeraden 5 zusammen, was aber bei anderen Ausführungsformen der Erfindung nicht der Fall sein muss. Die Achse 6 durchstößt die Detektorstrecke 4 an einem Drehpunkt **7**. Der Drehpunkt 7 liegt in der Mitte der Detektorstrecke 4, die Detektoranordnung gemäß Fig. 1 fällt damit nicht unter Anspruch 1.

Durch Drehung des Detektors 3 um die Achse 6 kann die Detektorstrecke 4 eine Kreisfläche mit einem Durchmesser entsprechend der Länge der langen Seiten der Detektorstrecke 4 überstreichen.

Wird während eines Streuexperiments der Detektor 3 um die Achse 6 gedreht, so dass während des Streuexperiments alle Winkelpositionen (Rotationsstellungen des Detektors 3 um die Achse 6) des Detektors 3 bevorzugt gleich lange detektiert werden, so kann aus den registrierten Röntgenquanten mit Hilfe der Ortsauflösung des eindimensionalen Detektors 3 und dem Wissen der bei jedem Zählereignis vorliegenden Winkelposition des Detektors 3 ein zweidimensionales Beugungsbild für die überstrichene Kreisfläche erstellt werden.

Der Detektor 3 ist bevorzugt auf einem verschwenkbaren Goniometerarm befestigt. Durch Verschwenken des Goniomenterarms in eine weitere Position des Detektors 3 kann mit dem Detektor 3 für eine weitere Kreisfläche entsprechend einem bezüglich der Probe 2 anderen Raumwinkelbereich ein weiteres Beugungsbild erstellt werden. Durch Aneinanderfügen mehrerer solchermaßen erstellter lokaler Beugungsbilder, gegebenenfalls mit etwas Überlappung von benachbarten lokalen Beugungsbildern, kann ein grundsätzlich beliebig großer und zusammenhängender Raumwinkelbereich mit dem eindimensionalen Detektor 3 vermessen werden.

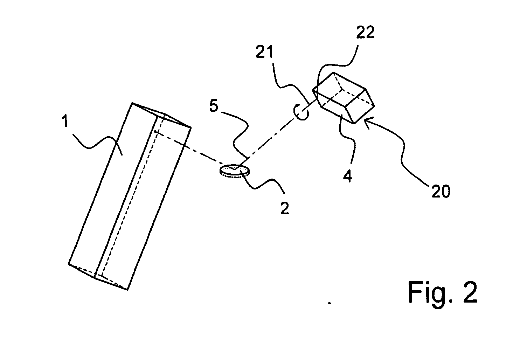

**Fig. 2** zeigt eine erste erfindungsgemäße Detektoranordnung. Ein Detektor **20** ist um eine Achse **21** drehbar, wobei die Achse 21 wiederum mit der Verbindungsgeraden 5 von Probe 2 und Detektor 20 zusammenfällt. Die Achse 21 durchstößt jedoch die Detektorstrecke 4 des Detektors 20 am Rand der Detektorstrecke 4 in einem Drehpunkt **22**. Mit der Detektorstrecke 4 des Detektors 20 kann eine Kreisfläche mit einem Durchmesser entsprechend der zweifachen Länge der Detektorstrecke 4 überstrichen werden.

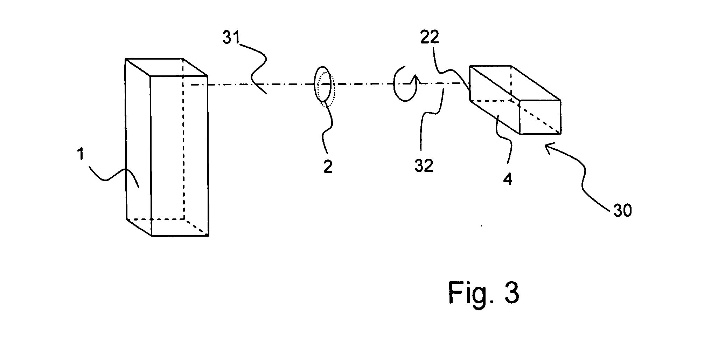

In **Fig. 3** ist eine weitere erfindungsgemäße Detektoranordnung in Transmissionsgeometrie dargestellt. Diese Anordnung ist vor allem für die Kleinwinkelstreuung geeignet. Eine Röntgenquelle **1**, eine Probe 2 und ein Detektor **30** sind näherungsweise auf einer Geraden **31** angeordnet. Ein von der Röntgenquelle **1** ausgehender Röntgenstrahl durchdringt die Probe 2,
wobei es zu Streuprozessen kommen kann. Die transmittierte Röntgenstrahlung trifft teilweise auf den Detektor 30. Der Detektor 30 ist drehbar um eine Achse **32** gelagert, die mit der Geraden 31 und damit der Streurichtung zusammenfällt. Die Achse 32 durchstößt die Detektorstrecke 4 des Detektors 30 am Rand der Detektorstrecke 4 im Drehpunkt 22. Der Detektor 30 ist bevorzugt ausschließlich durch die Achse 32 beweglich, wobei die Achse 32 ortsfest ausgebildet ist. Diese Beweglichkeit des Detektors 30 genügt, um Röntgenstrahlung mit nur einer kleinen Winkelabweichung gegenüber dem Primärstrahl (Kleinwinkelstreuung) vollständig zu erfassen, indem der Detektor 30 mit seiner Detektorstrecke 4 den Raumwinkelbereich in unmittelbarer Umgebung des Primärstrahls durch Drehung um die Achse 32 abscannt.

## Patentansprüche

1. Detektoranordnung zum Erfassen von an einer Probe (2) gestreuter Röntgen- oder Neutronenstrahlung,
mit einem 1-dimensionalen, längs einer Detektorstrecke (4) ausgerichteten, zählenden Teilchen- oder Photonendetektor (20; 30),
wobei die Detektorstrecke (4) im Wesentlichen senkrecht zu einer Verbindungsgeraden (5) zwischen Probe (2) und Detektor (20; 30) (=Streurichtung) angeordnet ist, wobei der Detektor (20; 30) um eine Achse (21; 32) parallel zur Streurichtung drehbar ist,
dass eine Vielzahl von definierten Winkelpositionen des Detektors (20; 30) durch eine Drehung des Detektors (20; 30) um die Achse (21;
32) parallel zur Streurichtung einstellbar ist, wobei
die Detektorstrecke (4) rechteckförmig ausgebildet ist, wobei die Detektorstrecke (4) senkrecht zur Drehachse (21; 32) verläuft,
wobei der Drehpunkt (7; 22) des Detektors (20; 30), durch den die Achse (21; 32) parallel zur Streurichtung verläuft, an einem Ende der Detektorstrecke (4) angeordnet ist,
wobei die Detektorstrecke (4) zur Durchführung einer Volldrehung ausgebildet ist, so dass eine Kreisfläche überstrichen werden kann,
und der Winkelvorschub von Winkelpositionen zu Winkelposition gerade so groß ist, dass an dem vom Drehpunkt (22) weiter entfernt liegenden Ende der Detektorstrecke (4) der Winkelvorschub entlang des Umfangs der überstrichenen Kreisfläche etwa der Breite der Detektorstrecke (4) entspricht, so dass ein geschlossener Raumwinkelbereich lückenlos erfasst werden kann.

2. Detektoranordnung nach Anspruch 1, **dadurch gekennzeichnet, dass** der Detektor (20; 30) auf einem schwenkbaren Goniometerarm montiert ist, wobei die Längsrichtung des Goniometerarms parallel zur Streurichtung verläuft.

3. Detektoranordnung nach Anspruch 1, **dadurch gekennzeichnet, dass** die Probe (2) von einer Quelle (1) her in Transmission durchstrahlbar ist, und dass die Quelle (1), die Probe (2) und der Detektor (30) auf einer Geraden (31) angeordnet sind (=Vorwärtsstreuung).

4. Detektoranordnung nach einem der vorhergehenden Ansprüche, **dadurch gekennzeichnet, dass** die definierten Winkelpositionen automatisch gesteuert und/oder geregelt anfahrbar sind, insbesondere mittels eines Motors.

5. Verwendung eines Röntgen- oder Neutronen-Diffraktometers mit einer Detektoranordnung nach einem der Ansprüche 1 bis 4, mit folgenden Schritten:
(a) Platzieren des Detektors (20; 30) auf einer ersten Position in einer ersten vorgegebenen Streurichtung;
(b) Orientieren des Detektors (20; 30) in eine erste Winkelposition durch Drehen des Detektors (20; 30) um die Achse (6; 21; 32) parallel zur Streurichtung, und Aufnahme von ortsaufgelösten Messdaten längs der Detektorstrecke (4) in der ersten Winkelposition;
(c) inkrementiertes oder kontinuierliches Drehen des Detektors (20; 30) in mindestens eine weitere Winkelposition, und Aufnahme von ortsaufgelösten Messdaten längs der Detektorstrecke (4) in dieser Winkelposition;
(d) Speichern und Verarbeiten der aufgenommenen Messdaten mit einem vorgegebenen Algorithmus.

6. Verwendung nach Anspruch 5, **dadurch gekennzeichnet, dass** durch die verschiedenen Winkelpositionen des Detektors (20; 30) in den Schritten (b) bis (c) in der ersten Position des Detektors (20; 30) in der vorgegebenen Streurichtung der von der Detektorstrecke (4) maximal überstreichbare Raumwinkelbereich vollständig erfasst wird.

7. Verwendung nach einem der Ansprüche 5 oder 6, **dadurch gekennzeichnet, dass** durch den Algorithmus in Schritt (d) ein 2-dimensionales Beugungsbild erstellt wird.

8. Verwendung nach einem der Ansprüche 5 bis 7, **dadurch gekennzeichnet, dass** nach Schritt (c) der Detektor (20; 30) in mindestens einer weiteren Position in einer weiteren vorgegebenen Streurichtung platziert wird, und dass die Verfahrensschritte (b) bis (c) in dieser weiteren Position des Detektors (20; 30) wiederholt werden.

9. Verwendung nach einem der Ansprüche 5 bis 7, **dadurch gekennzeichnet, dass** nach Schritt (d) der Detektor (20; 30) in mindestens einer weiteren Position in einer weiteren vorgegebenen Streurichtung platziert wird, und dass die Verfahrensschritte (b) bis (d) in dieser weiteren Position des Detektors (20; 30) wiederholt werden.

10. Verwendung nach einem der Ansprüche 8 oder 9, **dadurch gekennzeichnet, dass** durch die verschiedenen Positionen und Winkelpositionen des Detektors (20; 30) während des Verfahrens ein geschlossener Raumwinkelbereich vollständig erfasst wird.

11. Verwendung nach einem der Ansprüche 5 bis 7, **dadurch gekennzeichnet, dass** nach Schritt (c) die Probe (2) in mindestens eine weitere Lage, erhältlich durch Drehung und/oder Translation der Probe (2), gebracht wird, und dass die Verfahrensschritte (b) bis (c) in dieser weiteren Lage der Probe (2) wiederholt werden.

12. Verwendung nach einem der Ansprüche 5 bis 7, **dadurch gekennzeichnet, dass** nach Schritt (d) die Probe (2) in mindestens eine weitere Lage, erhältlich durch Drehung und/oder Translation der Probe (2), gebracht wird, und dass die Verfahrensschritte (b) bis (d) in dieser weiteren Lage der Probe (2) wiederholt werden.

13. Verwendung eines Röntgen- oder Neutronen-Diffraktometers mit einer Detektoranordnung nach einem der Ansprüche 1 bis 4, mit folgenden Schritten:
(a') Orientieren des Detektors (20; 30) in eine erste, vorgegebene Winkelposition durch Drehen des Detektors (20; 30) um die Achse (21; 32) parallel zur Streurichtung;
(b') Platzieren des Detektors (20; 30) auf einer ersten Position in einer ersten Streurichtung, und Aufnahme von ortsaufgelösten Messdaten längs der Detektorstrecke (4) in der ersten Position;
(c') inkrementiertes Platzieren des Detektors (20; 30) auf mindestens einer weiteren Position in einer weiteren Streurichtung, und Aufnahme von ortsaufgelösten Messdaten längs der Detektorstrecke (4) in der weiteren Position;
(d') Speichern und Verarbeiten der aufgenommenen Messdaten mit einem vorgegebenen Algorithmus.

## Claims

1. Detector arrangement for detecting X-ray or neutron radiation scattered on a sample (2), comprising a one-dimensional, particle or photon counting detector (20; 30) which is oriented along a detector path (4), wherein the detector path (4) is disposed substantially perpendicularly to a straight line (5) extending between the sample (2) and the detector (20; 30) (scattering direction), wherein the detector (20; 30) can be rotated about an axis (21; 32) parallel to the scattering direction, wherein a plurality of defined angle positions of the detector (20; 30) can be adjusted through rotation of the detector (20; 30) about the axis (21; 32) parallel to the scattering direction, wherein the detector path (4) is rectangular and extends perpendicularly to the axis of rotation (21; 32), wherein the pivot point (7; 22) of the detector (20; 30) through which the axis (21;32) extends parallel to the scattering direction is disposed at an end of the detector path (4), wherein the detector path (4) is designed for performing a full turn in order to sweep a circular surface, and the angle advance from one angle position to the next angle position is just large enough that the angle advance at the end of the detector path (4) which is disposed further away from the pivot point (22), and along the circumference of the swept circular surface corresponds substantially to the width of the detector path (4), such that a closed solid angle region can be completely detected.

2. Detector arrangement according to claim 1, **characterized in that** the detector (20; 30) is mounted on a pivotable goniometer arm, wherein the longitudinal extension of the goniometer arm is parallel to the scattering direction.

3. Detector arrangement according to claim 1, **characterized in that** the sample (2) can be penetrated by a source (1) in transmission, and the source (1), the sample (2) and the detector (30) are disposed on a straight line (31) (forward scattering).

4. Detector arrangement according to any one of the preceding claims, **characterized in that** the defined angle positions can be automatically controlled and/or approached in a controlled manner, in particular through a motor.

5. Use of an X-ray or neutron diffractometer comprising a detector arrangement according to any one of the claims 1 through 4, comprising the following steps:
(a) placing the detector (20; 30) at a first position in a first predetermined scattering direction;
(b) orienting the detector (20; 30) in a first angle position through rotation of the detector (20; 30) about the axis (6; 21; 32) parallel to the scattering direction and acquiring position-resolved measuring data along the detector path (4) in the first angle position;
(c) incrementally or continuously rotating the detector (20; 30) to at least one further angular position, and acquiring position-resolved measuring data along the detector path (4) at this angular position;
(d) storing and processing the acquired measuring data using a predetermined algorithm.

6. Use according to claim 5, **characterized in that** the maximum solid angle region which can be swept by the detector path (4) is completely covered through the various angle positions of the detector (20; 30) in steps (b) through (c) in the first position of the detector (20; 30) at the predetermined scattering direction.

7. Use according to claim 5 or 6, **characterized in that** the algorithm produces a two-dimensional diffraction image in step (d).

8. Use according to any one of the claims 5 through 7, **characterized in that**, subsequent to step (c), the detector (20; 30) is placed in at least one further position in a further predetermined scattering direction, and method steps (b) through (c) are repeated in this further position of the detector (20; 30).

9. Use according to any one of the claims 5 through 7, **characterized in that**, subsequent to step (d), the detector (20; 30) is placed in at least one further position in a further predetermined scattering direction and method steps (b) through (d) are repeated in this further position of the detector (20; 30).

10. Use according to claim 8 or 9, **characterized in that** a closed solid angle region is completely detected during displacement through the various positions and angular positions of the detector (20; 30).

11. Use according to any one of the claims 5 through 7, **characterized in that**, after step (c), the sample (2) is brought into at least one further position obtained through rotation and/or translation of the sample (2), and method steps (b) through (c) are repeated in this further position of the sample (2).

12. Use according to any one of the claims 5 through 7, **characterized in that**, after step (d), the sample (2) is brought into at least one further position, obtained through rotation and/or translation of the sample (2), and the method steps (b) through (d) are repeated in this further position of the sample (2).

13. Use of an X-ray or neutron diffractometer comprising a detector arrangement according to any one of the claims 1 through 4, comprising the following steps:
(a') orienting the detector (20; 30) in a first predetermined angular position by rotating the detector (20; 30) about the axis (21; 32) parallel to the scattering direction;
(b') placing the detector (20; 30) at a first position in a first scattering direction and acquiring position-resolved measuring data along the detector path (4) in the first position;
(c') incremental placement of the detector (20; 30) to at least one further position in a further scattering direction, and acquiring position-resolved measuring data along the detector path (4) in the further position;
(d') storing and processing the acquired measuring data using a predetermined algorithm.

## Revendications

1. Dispositif détecteur pour la saisie de rayonnement X ou neutronique dispersé sur un échantillon (2), avec un détecteur de particules ou de photons (20 ; 30) unidimensionnel, orienté le long d'une section détectrice (4) et comptant, dans lequel la section détectrice (4) est disposée essentiellement perpendiculairement à une droite de jonction (5) entre l'échantillon (2) et le détecteur (20 ; 30) (= direction de dispersion), dans lequel le détecteur (20 ; 30) peut tourner autour d'un axe (21 ; 32) parallèlement à la direction de dispersion de telle manière qu'une pluralité de positions angulaires définies du détecteur (20 ; 30) soient réglables par une rotation du détecteur (20 ; 30) autour de l'axe (21 ; 32) parallèlement à la direction de dispersion, dans lequel la section détectrice (4) est de forme rectangulaire, dans lequel la section détectrice (4) s'étend perpendiculairement à l'axe de rotation (21 ; 32), dans lequel le centre de rotation (7 ; 22) du détecteur (20 ; 30) par lequel l'axe (21, 32) passe parallèlement à la direction de dispersion est disposé à une extrémité de la section détectrice (4),
dans lequel la section détectrice (4) est conçue pour effectuer une rotation complète, de sorte qu'il est possible de balayer une surface circulaire, et l'avance angulaire de position angulaire à position angulaire est juste assez grande pour qu'à l'extrémité de la section détectrice (4) plus éloignée du centre de rotation (22) l'avance angulaire le long du périmètre de la surface circulaire balayée correspond à peu près à la largeur de la section détectrice (4), de sorte qu'il est possible de saisir sans lacunes une plage d'angle solide fermée.

2. Dispositif détecteur selon la revendication 1, **caractérisé par le fait que** le détecteur (20 ; 30) est monté sur un bras de goniomètre pivotant, la direction longitudinale du bras de goniomètre s'étendant parallèlement à la direction de dispersion.

3. Dispositif détecteur selon la revendication 1, **caractérisé par le fait que** l'échantillon (2) peut être traversé par le rayonnement d'une source (1) et que la source (1), l'échantillon (2) et le détecteur (30) sont disposés sur une droite (31) (= dispersion en avant).

4. Dispositif détecteur selon l'une des revendications précédentes, **caractérisé par le fait que** les positions angulaires définies sont approchables par commande et/ou régulation automatique, en particulier au moyen d'un moteur.

5. Utilisation d'un diffractomètre X ou neutronique avec un dispositif détecteur selon l'une des revendications 1 à 4, présentant les étapes suivantes :
(a) placement du détecteur (20 ; 30) sur une première position dans une première direction de dispersion prédéfinie ;
(b) orientation du détecteur (20 ; 30) dans une première position angulaire par rotation du détecteur (20 ; 30) autour de l'axe (6 ; 21 ; 32) parallèlement à la direction de dispersion et relevé de données de mesure à résolution locale le long de la section détectrice (4) dans la première position angulaire ;
(c) rotation incrémentée ou continue du détecteur (20 ; 30) dans au moins une autre position angulaire et relevé de données de mesure à résolution locale le long de la section détectrice (4) dans cette position angulaire ;
(d) mémorisation et traitement des données de mesure relevées par un algorithme prédéfini.

6. Utilisation selon la revendication 5, **caractérisée par le fait que** les différentes positions angulaires du détecteur (20 ; 30) aux étapes (b) à (c) dans la première position du détecteur (20 ; 30) dans la direction de dispersion prédéfinie permettent de saisir complètement la plage d'angle solide maximum balayable par la section détectrice (4).

7. Utilisation selon la revendication 5 ou 6, **caractérisée par le fait que** l'on élabore une image de diffraction bidimensionnelle au moyen de l'algorithme de l'étape (d).

8. Utilisation selon l'une des revendications 5 à 7, **caractérisée par le fait qu'**après l'étape (c), le détecteur (20 ; 30) est placé dans au moins une autre position dans une autre direction de dispersion prédéfinie et que les étapes de procédé (b) à (c) sont répétées dans cette autre position du détecteur (20 ; 30).

9. Utilisation selon l'une des revendications 5 à 7, **caractérisée par le fait qu'**après l'étape (d), le détecteur (20 ; 30) est placé dans au moins une autre position dans une autre direction de dispersion prédéfinie et que les étapes de procédé (b) à (d) sont répétées dans cette autre position du détecteur (20 ; 30).

10. Utilisation selon l'une des revendications 8 ou 9, **caractérisée par le fait que** les différentes positions et positions angulaires du détecteur (20 ; 30) pendant le procédé permettent de saisir complètement une plage d'angle solide fermée.

11. Utilisation selon l'une des revendications 5 à 7, **caractérisée par le fait qu'**après l'étape (c), l'échantillon (2) est placé dans au moins une autre position qui peut être obtenue par rotation et/ou translation de l'échantillon (2) et que les étapes de procédé (b) à (c) sont répétées dans cette autre position de l'échantillon (2).

12. Utilisation selon l'une des revendications 5 à 7, **caractérisée par le fait qu'**après l'étape (d), l'échantillon (2) est placé dans au moins une autre position qui peut être obtenue par rotation et/ou translation de l'échantillon (2) et que les étapes de procédé (b) à (d) sont répétées dans cette autre position de l'échantillon (2).

13. Utilisation d'un diffractomètre X ou neutronique avec un dispositif détecteur selon l'une des revendications 1 à 4, présentant les étapes suivantes :
(a') orientation du détecteur (20 ; 30) dans une première position angulaire prédéfinie par rotation du détecteur (20 ; 30) autour de l'axe (21 ; 32) parallèlement à la direction de dispersion ;
(b') placement du détecteur (20 ; 30) sur une première position dans une première direction de dispersion et relevé de données de mesure à résolution locale le long de la section détectrice (4) dans la première position ;
(c') placement incrémenté du détecteur (20 ; 30) sur au moins une autre position dans une autre direction de dispersion et relevé de données de mesure à résolution locale le long de la section détectrice (4) dans l'autre position ;
(d') mémorisation et traitement des données de mesure relevées par un algorithme prédéfini.
